(19) Europäisches Patentamt
European Patent Office
Office européen des brevets

(11) **EP 2 685 443 A1**

(12) **EUROPEAN PATENT APPLICATION**

(43) Date of publication:
**15.01.2014 Bulletin 2014/03**

(51) Int Cl.:
***G09B 9/00*** *(2006.01)*

(21) Application number: **12305831.5**

(22) Date of filing: **11.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Thomson Licensing**
**92130 Issy-les-Moulineaux (FR)**
• **Inria Institut National de Recherche en Informatique et en Automatique**
**78150 Le Chesnay (FR)**

(72) Inventors:
• **Danieau, Fabien**
**35000 Rennes (FR)**

• **Fleureau, Julien**
**35000 Rennes (FR)**
• **Guillotel, Philippe**
**35770 Verne sur Seiche (FR)**
• **Mollet, Nicolas**
**35270 Meillac (FR)**
• **Lecuyer, Anatole**
**35000 Rennes (FR)**

(74) Representative: **Thies, Stephan**
**Deutsche Thomson OHG**
**European Patent Operations**
**Karl-Wiechert-Allee 74**
**30625 Hannover (DE)**

(54) **Method to render global 6 DoF motion effect with multiple local force-feedback**

(57) The present invention relates to a method and device for automatically generating force feedback data for a haptic device for providing simulated six degrees of freedom movement. A three dimensional acceleration component corresponding to the movement to be simulated is determined. A three dimensional angular velocity component corresponding to the movement to be simulated is determined. Control signals for controlling at least three force feedback devices are determined, wherein each of the three force feedback devices provides force effects along three perpendicular axes to a fixation point associated to each of it, the three force feedback devices being arranged at defined positions with regard to each other, and the three fixation points define a geometric plane.

Fig. 5

**Description**

The present invention relates to a method and device for automatically generating force feedback data for a haptic device for providing simulated six degrees of freedom (6-DoF) movement.

Motion simulators are well-known devices designed to make an audience member feel motion. They are intensively used as driving or flight simulators for learning purposes. Most of them are based on the Stewart's platform (B. Dasgupta, "The Stewart platform manipulator: a review", Mechanism and Machine Theory, Vol. 35, Issue 1, pp. 15-40, Jan. 2000). It is a six degrees of freedom (6-DoF) platform moving thanks to six hydraulic cylinders. A six degrees of freedom platform moves in three directions, e.g. in two directions in the horizontal plane and in a movement direction along the vertical axis. Further, rotation around these three directions is performed. A motion simulator is basically a seat attached on this kind of platform that may be especially used to enhance audiovisual experience. Here, the seat moves while the audience member is watching a movie to enhance his experience. These systems are intensively used in amusement park or in "4D cinemas", but few of them are designed for the end-user consumer.

Also comfortable chairs placed on four actuators dedicated to the end-user living-room are known in the art. These seats allow three degrees of freedom (pitch, roll and heave) for audiovisual content viewing and consumer applications. The three degrees of freedom are movement along the vertical axis (heave) and rotation around two perpendicular horizontal axes (pitch and roll). But these chairs remain expensive, render only 3-DoF and are still based on a Stewart's platform.

In a less invasive way, the sensation of motion may also be induced by a force feedback device, as disclosed in WO2011/032937. By applying a force on the user's hand, the system generates an illusion of motion with force feedback. While the interface is pulling the hand, the user feels moving forward.

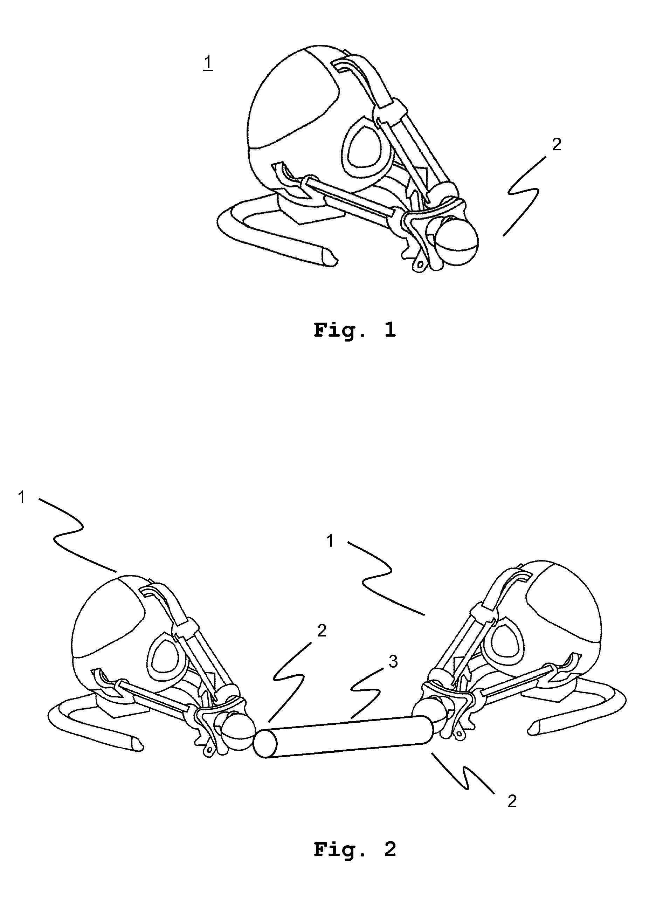

A lot of force feedback devices have been proposed to enable local interaction with a user. Typically, 3-DoF force feedback devices are able to provide force effects along three perpendicular axes. Fig. 1 shows an example of a 3-DoF force feedback device 1. It is relatively inexpensive and it is designed for the mass-market. It has a handgrip acting as a fixation point 2, to which a three dimensional force is applied. Also, other 3-DoF devices exist.

A. Shah, S. Teuscher, E. McClain, and J. Abbott, "How to build an inexpensive 5-DOF haptic device using two novint falcons," Haptics: Generating and Perceiving Tangible Sensations, pp. 136-143, 2010, disclose two 3-DoF force feedback devices 1, which are connected to each other to provide one 5-DoF force feedback system as disclosed in Fig. 2. The handgrip 2 of each device is linked by a stylus 3. This way the stylus 3 is manipulated along three perpendicular axes and rotated around two of these axes.

It is an object of the invention to propose a low cost device and a method for operating the same for rendering 6-DoF interactions.

According to the invention, a method for automatically generating force feedback data for a haptic device is disclosed. By providing force feedback a six degrees of freedom movement is simulated. A first step consists of determining a three dimensional acceleration component corresponding to the movement to be simulated. A second step consists of determining a three dimensional angular velocity component corresponding to the movement to be simulated. A third step consists of determining control signals for controlling at least three force feedback devices. Each of the three force feedback devices has a fixation point associated to it and provides force effects along three perpendicular axes to its fixation point. The three force feedback devices are arranged at defined positions with regard to each other and the three fixation points define a geometric plane. Thus, the fixation points are arranged in a coplanar way but do not lie on a straight line. The method according to the invention has the advantage that a six degrees of freedom movement is simulated with low cost equipment. Three degrees of freedom force feedback devices are available in the consumer electronic market and are available for these application at reasonable prices.

Preferably, three dimensional displacement of each fixation point depending on the three dimensional acceleration component and the three dimensional angular velocity is determined and is a basis for determining control signals for controlling the at least three force feedback devices. This has the advantage that an angular movement is simulated using devices that as standalone devices are only able to provide three dimensional movements.

Advantageously, a scaling factor is determined. The scaling factor is used for scaling the three dimensional displacement such that the workspace of the force feedback devices is well utilized. The scaling factor is determined after three dimensional displacement values have been determined, which are applicable for a full sequence to be simulated. Thus, the maximum displacement for this full sequence is known and the scaling factor is determined such that the workspace is fully used in at least one dimension of the force feedback devices. Another solution is to adapt the scaling factor continuously to the three dimensional displacement. This is done by integration of the three dimensional displacement over a certain time. Other rules for scaling to optimally use the three dimensional workspace of the force feedback devices and at the same time to preserve the ratio between the determined displacements in different directions and for different force feedback devices are applicable.

Advantageously, the force feedback devices are located in the left armrest, the right armrest and the headrest of a chair, respectively. Thus, the three dimensional displacements of the three fixation points are determined by the assumption that the fixation points are located in the left armrest, the right armrest and the headrest of a chair, respectively. The defined fixation points thus provide the illusion of a six degrees of freedom movement to a user who contacts with his left arm, right arm and head one of the fixation points, respectively.

Advantageously, the three dimensional displacement of each fixation point is based on a skeleton model. Further, the movement to be simulated is based on at least part of a movie or gaming content. This has the advantage that a user sitting on a chair in front of a TV or computer gets the illusion of six degrees of freedom movement synchronized to the audiovisual content he is seeing by a cheap and handy device which can be easily used as home equipment.

According to a further aspect of the invention, a device for rendering six degrees of freedom interactions is disclosed. The device consists of at least three force feedback devices. Each of the three force feedback devices provides force effects to a fixation point along three perpendicular axes. The three force feedback devices are arranged at defined positions with regard to each other and the three fixation points define a geometric plane. Thus, the fixation points are arranged in a coplanar way but do not lie on a straight line. The defined positions of the force feedback devices being fixed positions. Alternatively, the defined positions of the force feedback devices might also move over time, such that the displacement of the fixation point is a superimposed movement of the displacement of the force feedback device and the displacement of the fixation point with regard to the force feedback device. Further, the fixation points being arranged such that a user stands with each of his feet on one fixation point and e.g. leans against the third fixation point. Any other arrangement in which the three fixation points have contact to a user and define a geometric plane is applicable.

Advantageously, the device is integrated into a chair and one of the force feedback devices is integrated into the left armrest, the right armrest and the headrest, respectively.

Advantageously, at least one further force feedback device is integrated into at least one legrest. This does not provide a further degree of freedom but supports the artificial six degrees of freedom simulation provided to the user. In this way all the remote parts of the human body are stimulated with the artificial movement while the main part of the body still does not move. The inventors found that, contrary to known 6-DoF simulators, it is not necessary to move the whole body in order to generate a 6-DoF feeling in a user, but that moving at least 3 remote parts of the body is sufficient for this purpose.

Advantageously, the device includes a control unit that generates control signals to control the at least three force feedback devices dependent on each other in a way that the movements of the fixation points of the at least three force feedback devices provide six degrees of freedom movement to an object fixed between the three fixation points. The object fixed between the three fixation points might be any object and especially might also be a human being. Also, further force feedback devices might be used to increase the number of fixation points and thus to enhance the illusion of six degrees of freedom movement.

For better understanding the invention shall now be explained in more detail in the following description with reference to the figures. It is understood that the invention is not limited to this exemplary embodiment and that specified features can also expediently be combined and/or modified without departing from the scope of the present invention.

Fig. 1    shows a 3-DoF force feedback device
Fig. 2    shows a 5-DoF force feedback system built by two 3-DoF devices
Fig. 3    shows a 6-DoF force feedback system according to the invention
Fig. 4    shows a schematic view on the 6-DoF force feedback system according to the invention
Fig. 5    shows a skeleton model
Fig. 6    shows a schematic view of the system according to the invention including the extraction of motion data, haptic rendering and force feedback system

Fig. 1 and Fig. 2 are already described in the introduction above.

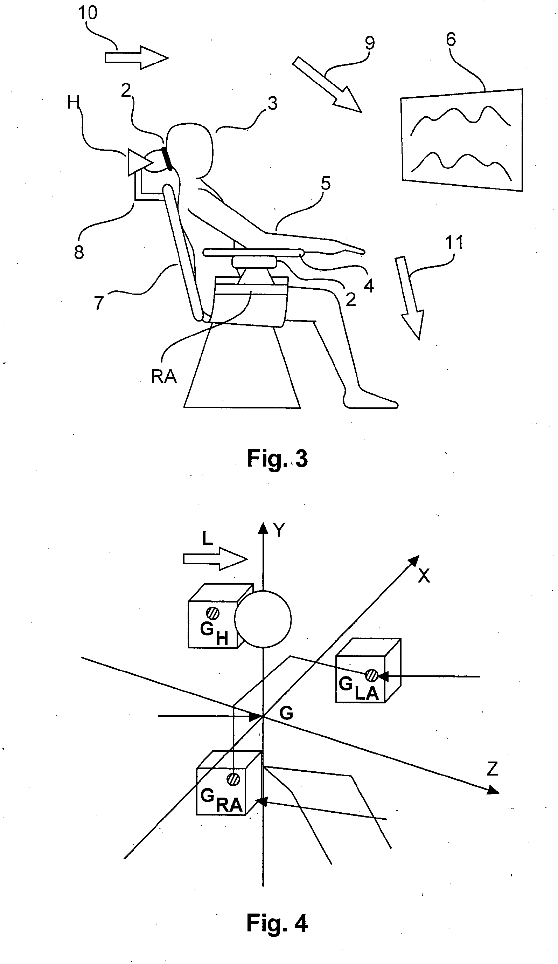

Fig. 3 shows an exemplary embodiment of the invention. A user sits on a chair 7 and has contact to a fixation point 2 of a 3-DoF force feedback device H with his head/neck 3, and two further 3-DoF force feedback devices RA, LA with his left arm and his right arm 5, respectively. In Fig. 3, only the right arm 5 of the user and the right armrest 4 of the chair is shown for sake of simplicity. The arms 5 of the user lie on armrests 4, which transmit the movement of the fixation points 2 of the force feedback devices RA, LA to the users arms 5. Alternatively, the arms 5 of the user might contact the fixation points 2 directly. The force feedback device H which moves the head 3 of the user is mounted to the chair 7 by a fixture 8. Thus, the embodiment makes use of three 3-DoF local actuators to render a 6-DoF global motion (3 x 3-DoF → 6-DoF). In front of the user, a display screen 6 is arranged on which audiovisual content is presented. Fig. 3 shows specific examples of the movements of the fixation points 2 of the force feedback devices H, RA, LA. The movement of the fixation point 2 of the force feedback device H mounted at the users head is indicated by arrow 10. The movement of the fixation point 2 of the force feedback device RA mounted in the right armrest 4 is indicated by arrow 11. The 6-DoF illusion of motion which is generated is indicated by the curved arrow 9.

Fig. 4 introduces a schematic representation of the system as well as an introduction to the different notations that are used in the following.

The system is made of three local 3-DoF force feedback devices H, RA, LA respectively placed behind the head of the user and under the right and left forearms of the user. The force feedback devices H, RA, LA are preferably placed in the headrest, left armrest and right armrest of a chair (not shown here). The user passively rests its head and hands (or arms) on each of the 3-DoF force feedback devices H, RA, LA, while he is watching a movie projected on the display screen placed in front of him. If no motion is rendered, the three force feedback devices H, RA, LA maintain the head, right arm and left arm of the user at the central positions $G_H$, $G_{RA}$, $G_{LA}$, respectively. After the viewing sequence has started and motion is rendered, each force feedback device H, RA, LA superimposes 3-DoF motions of the different associated part of the body in a limited workspace schematically indicated by the three boxes shown in Fig. 4. The workspace corresponds to the maximum amplitude L of the 3-DoF force feedback device H, RA, LA in each direction.

The proposed system aims at making the audience member feel a global 6-DoF motion. An audiovisual content augmented with some extra information concerning the main motion observed in a scene is described in terms of linear accelerations $\mathbf{a}(t) = [a_x(t), a_y(t), a_z(t)]^T$ (the gravity component being removed) and angular velocity $\mathbf{w}(t) = [w_x(t), w_y(t), w_z(t)]^T$ for each time t. The 6-DoF global motion is modelled by the quantities $\mathbf{a}(t)$ and $\mathbf{w}(t)$.

While the user is watching the audiovisual content, the three local force feedback devices H, RA, LA move in a synchronized way to give the illusion of the global motion represented by a(t) and w(t). More precisely, each force feedback device H, RA, LA renders the motions that would be felt in different parts of the body. A first force feedback device H would especially render the motion felt at the head position, whereas two other force feedback devices RA, LA render the motions felt by the hands.

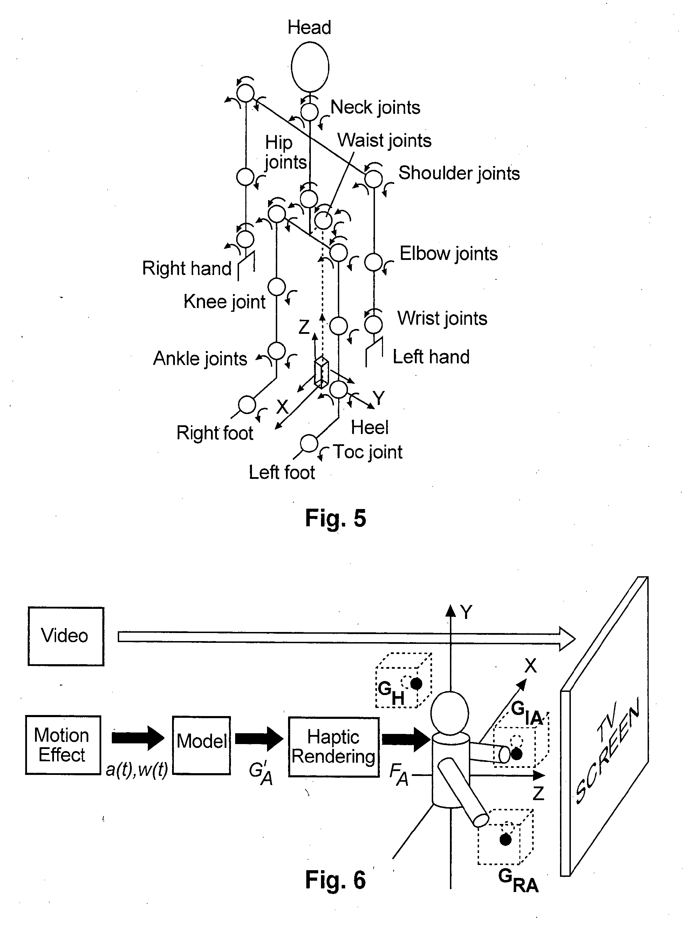

Fig. 5 discloses a generalized poly-articulated skeleton, made of body segments and joints, which is used to calculate the propagation of forces to the desired body parts. In the case described above, it targets the hands/arms and the head. If additional actuators are considered, this generalized skeleton directly allows to take them into account.

A first simplified implementation of the skeleton is considered through a rigid body approach, where the motions of the hands are considered equivalent to the movements of the shoulders.

The upper part of the body, including the head and the chest, is considered as a turning rigid body which angular velocity (or turn-rate) is represented by the tridimensional vector $\mathbf{w}(t)$ and which acceleration expressed in G is $\mathbf{a}(t)$. Both quantities are considered to be relative to the navigation frame $F_N$ and are expressed in the body frame $F_B$ (centered in G).

The coordinates of the head $P_H$, and the coordinates of the left and right shoulders $P_{LS}$, $P_{RS}$ are known in $F_B$. The accelerations in each of those points are computed by the following mechanical relation (time derivation of the kinetic torsor) :

$$\vec{a}(P \in S \mid F_N) = \mathbf{a}(G \in S \mid F_N) + \frac{d\mathbf{w}}{dt} \times \overrightarrow{GP} + \mathbf{w} \times (\mathbf{w} \times \overrightarrow{GP})$$

The command law to control the three local actuators is then formulated in terms of displacement from their initial and central position $G_H$, $G_{LA}$, $G_{RA}$ by:

$$\overrightarrow{G_H G'_H} = \begin{bmatrix} k_x & 0 & 0 \\ 0 & k_y & 0 \\ 0 & 0 & k_z \end{bmatrix} \left( \mathbf{a}(t) + \frac{d\mathbf{w}}{dt}(t) \times \overrightarrow{GP_H} + \mathbf{w}(t) \times \left( \mathbf{w}(t) \times \overrightarrow{GP_H} \right) \right)$$

$$\overrightarrow{G_{LA} G'_{LA}} = \begin{bmatrix} k_x & 0 & 0 \\ 0 & k_y & 0 \\ 0 & 0 & k_z \end{bmatrix} \left( \mathbf{a}(t) + \frac{d\mathbf{w}}{dt}(t) \times \overrightarrow{GP_{LS}} + \mathbf{w}(t) \times \left( \mathbf{w}(t) \times \overrightarrow{GP_{LS}} \right) \right)$$

$$\overrightarrow{G_{RA}G'_{RA}} = \begin{bmatrix} k_x & 0 & 0 \\ 0 & k_y & 0 \\ 0 & 0 & k_z \end{bmatrix} \left( \mathbf{a}(t) + \frac{d\mathbf{w}}{dt}(t) \times \overrightarrow{GP_{RS}} + \mathbf{w}(t) \times \left( \mathbf{w}(t) \times \overrightarrow{GP_{RS}} \right) \right)$$

where $G'_H$, $G'_{LA}$ and $G'_{RA}$ are the new application points at instant t, and $k_x$, $k_y$, $k_z$ are scaling factors to map the true motions in the workspaces of the three actuators.

Those scaling factors are determined to use the workspace of each force feedback device H, RA, LA in an optimum way, by especially finding a compromise to avoid any saturation while using the biggest space available in each workspace (to have a larger amplitude in the final rendering and thus larger feelings for the user).

Determining those scaling factors is made by a preprocessing step consisting in finding the maximum amplitude of each acceleration rendered by the three different actuators. Thereby, the maximum amplitude of a full sequence is considered. Alternatively, the scaling factor is adapted continuously to the three dimensional displacement. This is done by integration of the three dimensional displacement over a certain time.

Fig. 6 shows a schematic view of the system according to the invention. Motion data are extracted from the audiovisual content. A model is generated. The haptic effects are rendered and control signals to control the force feedback devices are determined. A system according to Fig. 4 is controlled by these control signals and a user watching audiovisual content in front of a TV screen is penetrated by the three force feedback devices.

**Claims**

1. Method for automatically generating force feedback data for a haptic device, the force feedback providing simulated six degrees of freedom movement, **characterized in that** the method comprises the steps:

   - determining a three dimensional acceleration component corresponding to the movement to be simulated;
   - determining a three dimensional angular velocity component corresponding to the movement to be simulated;
   - determining control signals for controlling at least three force feedback devices (H, RA, LA), wherein each of the three force feedback devices (H, RA, LA) provides force effects (10, 11) along three perpendicular axes to a fixation point (2) associated to each of it, the three force feedback devices (H, RA, LA) being arranged at defined positions with regard to each other, and the three fixation points define a geometric plane.

2. Method according to claim 1, **characterized in that** the step of determining control signals for controlling the at least three force feedback devices further comprises the step:

   - determining three dimensional displacement of each fixation point depending on the three dimensional acceleration component and the three dimensional angular velocity.

3. Method according to claim 2, **characterized in that** the step of determining three dimensional displacement of each fixation point further comprises the step:

   - applying a scaling factor to scale the three dimensional displacements to be determined such that the workspace of the force feedback devices (H, RA, LA) is well utilized.

4. Method according to any of claims 1-3, **characterized in that** the three dimensional displacements of the three fixation points (2) are determined under the assumption that the fixation points (2) are located in the left armrest, the right armrest (4) and the headrest of a chair (7), respectively.

5. Method according to any of claims 1-4, **characterized by** the step of determining three dimensional displacement of each fixation point (2) is based on a skeleton model.

6. Method according to any of claims 1-5, **characterized by** the movement to be simulated being based on at least part of a movie or gaming content.

7. Device for rendering six degrees of freedom interactions, **characterized in that** the device consists of at least three force feedback devices (H, RA, LA), wherein each of the three force feedback devices (H, RA, LA) provides force effects to a fixation point (2) along three perpendicular axes and the three force feedback devices (H, RA, LA) are arranged at defined positions with regard to each other, and the three fixation points (H, RA, LA) define a geometric plane.

8.  Device according to claim 7, **characterized in that** the device is integrated into a chair (7) and one of the force feedback devices (H, RA, LA) is integrated into the left armrest, the right armrest (4) and the headrest, respectively.

9.  Device according to claim 8, **characterized in that** at least one further force feedback device is integrated into at least one legrest.

10. Device according to any of claims 8 to 9, **characterized in that** it includes a control unit that generates control signals to control the at least three force feedback devices (H, RA, LA) dependent on each other in a way that the movements of the fixation points (2) of the at least three force feedback devices (H, RA, LA) provide six degrees of freedom movement (9) to an object fixed between the three fixation points (2).

Fig. 1

Fig. 2

**Fig. 3**

**Fig. 4**

**Fig. 5**

**Fig. 6**

Europäisches
Patentamt

European
Patent Office

Office européen
des brevets

# EUROPEAN SEARCH REPORT

**Application Number**

EP 12 30 5831

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Eric R. Bachmann, Xiaoping Yun, Doug McKinney, Robert B. McGhee, and Michael J. Zyda: "Design and Implementation of MARG Sensors for 3-DOF Orientation Measurement of Rigid Bodies", The MOVES Institute - Naval Postgraduate School , 31 December 2003 (2003-12-31), XP002692604, Retrieved from the Internet: URL:http://faculty.nps.edu/yun/pub/ICRA2003%20paper.pdf [retrieved on 2013-02-22] ----- | 1-10 | INV. G09B9/00 |
| A,D | WO 2011/032937 A2 (CENTRE NAT RECH SCIENT [FR]; INST NAT RECH INF AUTOMAT [FR]; OUARTI NI) 24 March 2011 (2011-03-24) * the whole document * ----- | 1-10 | |
| A,D | B. DASGUPTA: "The Stewart platform manipulator: a review", MECHANISM AND MACHINE THEORY, vol. 35, no. 1, 1 January 2000 (2000-01-01), pages 15-40, XP002692605, ----- | 1-10 | **TECHNICAL FIELDS SEARCHED (IPC)** G09B |

The present search report has been drawn up for all claims

| Place of search | Date of completion of the search | Examiner |
|---|---|---|
| Munich | 22 February 2013 | Mennerun, Steeve |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                    

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 30 5831

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2013

| Patent document cited in search report | Publication date | Patent family member(s) | Publication date |
|---|---|---|---|
| WO 2011032937 A2 | 24-03-2011 | CN 102640199 A | 15-08-2012 |
| | | EP 2478513 A2 | 25-07-2012 |
| | | FR 2950187 A1 | 18-03-2011 |
| | | KR 20120093885 A | 23-08-2012 |
| | | US 2012259604 A1 | 11-10-2012 |
| | | WO 2011032937 A2 | 24-03-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• WO 2011032937 A

### Non-patent literature cited in the description

• **B. DASGUPTA.** The Stewart platform manipulator: a review. *Mechanism and Machine Theory,* January 2000, vol. 35 (1), 15-40

• **A. SHAH ; S. TEUSCHER ; E. MCCLAIN ; J. AB-BOTT.** How to build an inexpensive 5-DOF haptic device using two novint falcons. *Haptics: Generating and Perceiving Tangible Sensations,* 2010, 136-143